(19) Europäisches Patentamt
European Patent Office
Office européen des brevets

(11) **EP 3 641 528 B1**

(12) **EUROPEAN PATENT SPECIFICATION**

(45) Date of publication and mention
of the grant of the patent:
**25.05.2022 Bulletin 2022/21**

(21) Application number: **18737997.9**

(22) Date of filing: **19.06.2018**

(51) International Patent Classification (IPC):
*A01G 13/02* *(2006.01)*  *A01G 9/14* *(2006.01)*
*D01D 5/253* *(2006.01)*  *D03D 1/00* *(2006.01)*
*D03D 13/00* *(2006.01)*  *D03D 15/44* *(2021.01)*

(52) Cooperative Patent Classification (CPC):
**A01G 13/0206; A01G 9/1438; D01D 5/253;
D03D 1/0035; D03D 13/008; D03D 15/44;**
A01G 2009/1453; A01G 2009/1461; Y02A 40/25

(86) International application number:
**PCT/IB2018/054492**

(87) International publication number:
**WO 2018/234981 (27.12.2018 Gazette 2018/52)**

(54) **RAIN PROOF SHEET WITH WARP AND/OR WEFT OF ROMBOIDAL SECTION**

REGENMANTEL MIT KETTEN- UND/ODER SCHUSSFADEN MIT RHOMBENFÖRMIGEM PROFIL

FILET IMPERMÉABLE AVEC CHAÎNE ET/OU TRAME DE SECTION RHOMBOÏDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2017 IT 201700068976**

(43) Date of publication of application:
**29.04.2020 Bulletin 2020/18**

(73) Proprietor: **Sachim Srl
70017 Putignano (BA) (IT)**

(72) Inventors:
• **STARACE, Giuseppe
70122 Bari (IT)**
• **LIPPOLIS, Marco
70017 Putignano (BA) (IT)**

(74) Representative: **Conversano, Gabriele
Laforgia, Bruni & Partners srl
Via Michele Garruba, 3
70122 Bari (IT)**

(56) References cited:
**WO-A1-2012/077144     CN-U- 202 380 181**

**Description**

The present invention relates to a rainproof net realized with warp yarns with circular section and weft yarns with no circular section form, in particular rhomboidal form.

Firstly, it is to be said that with rainproof net it is intended a net realized to be deployed above cultivations (for example above rows of vines) and to protect them from hail, insects or other agents. It is known that the use of plastic sheets for crops protection from atmospheric agents, since they are airproof and waterproof, is a possible cause of environmental conditions the plants are subjected to (overheating, condensate formation, fungi and bacteria proliferation, lack of transpiration etc.). More generally, plastic sheets do not allow a sufficient ventilation in the spaces occupied by plants.

It is also known the use of nets in agriculture for aims different from the just described ones, since the nets, in the known embodiments, are not efficient at stopping rain and guaranteeing the needed protection for plants.

In the field of yarns, at the state of the art there are known yarns in plastic material with non circular section, as it is described for example in the application JPH06346316. These yarns are used for completely different aims from the supposed one, for example for the realization of artificial turf, as it is described in document CN204940066.

In completely different technical fields from the one object of the present application, and so, for different aims, there are also known fabrics which use warp yarns with no circular section, as for example in US2008/0173369, wherein it is described a fabric with trapezoidal section warp, possibly with rounded greater base, and circular section weft which is used in machines for producing absorbent paper rolls to emboss the paper surface with the patterns needed to give the paper the absorbance property. A similar application is indicated in DE2847327, wherein it is described a fabric with circular section warp and rectangular section weft. In a completely different technical field it is described a carbon fibre fabric, used as stiffening for composite materials, realized with circular section weft and elliptical section warp (EP1046666). The fabric is used to be impregnated with resin for the realization of objects in composite material. Since it is impregnated with resin, it is not needed that the same is impermeable, and in fact only mechanical properties of the fabric are described in the document. WO2012/077144 A1 describes a net e.g. insect net for use in agriculture e.g. vineyard agriculture,that has multiple non-circular cross sectional warp yarns and multiple non-circular cross sectional weft yarns that are interwoven with each other.

No one of the known embodiments describes fabrics with protection function from hail and rain of crops, which have warp and weft with different section to each other in order to increase the fabric impermeabilizing properties, with equal yarns section (and so equal weight and production costs).

Therefore, aim of the present invention is to provide a rainproof net, which overcomes the limits linked to the embodiments known at the state of the art.

Another aim of the present invention is to provide a fabric for crops protection from rain, realized with rhomboidal section weft yarns or similar and circular section warp yarns.

The invention reaches the prefixed aims since it is a rainproof sheet with crops protection function from rain and hail, said sheet is realized with a fabric having rhomboidal section warp yarns and/or weft yarns. According to the invention, the fabric according to the invention is provided with circular section warp yarns and rhomboidal section weft yarns.

Description of figures

Some embodiments of the fabric according to the invention will be described in the following with reference to figures 1 to 5.

In figure 1 it is shown a fabric of the type known at the state of the art, with circular section warp and weft yarns: the fabric is shown in front view, in a section in warp direction and in a section in weft direction.
In figure 2 it is shown a first embodiment of the fabric according to the invention, with circular section warp yarns and rhomboidal section weft. The fabric is shown in front view, in a section in warp direction and in a section in weft direction.
In figure 3 it is shown a second embodiment of the fabric according to the invention, with circular section warp yarns, rhomboidal section weft yarns, characterized in that the warp yarns are coupled in groups of two. The fabric is shown in front view, in a section in warp direction and in a section in weft direction;
In figures 4-a and 4-b there are shown two geometrical schematizations of the warp passage around rhomboidal and circular section wefts.
In figure 5 it is shown another geometrical schematizations of the fabric according to the invention.
In figure 6 it is shown an embodiment in which both warp yarns and weft yarns have rhomboidal section.

Detailed description

The basis for the realization and following optimization of the fabric according to the invention was the observation, by means of video recording, with fabrics known at the state of the art, of the mechanisms of rain drops passage through a fabric or rainproof net. It was observed that water drops pass through the net only partially directly through the holes between weft and warp, due to the drop kinetic energy. A good portion of water passing under the rainproof net instead is stopped by the rainproof net firstly, slides on the net due to its installation slope and passes in the space between the weft yarn and warp yarn.

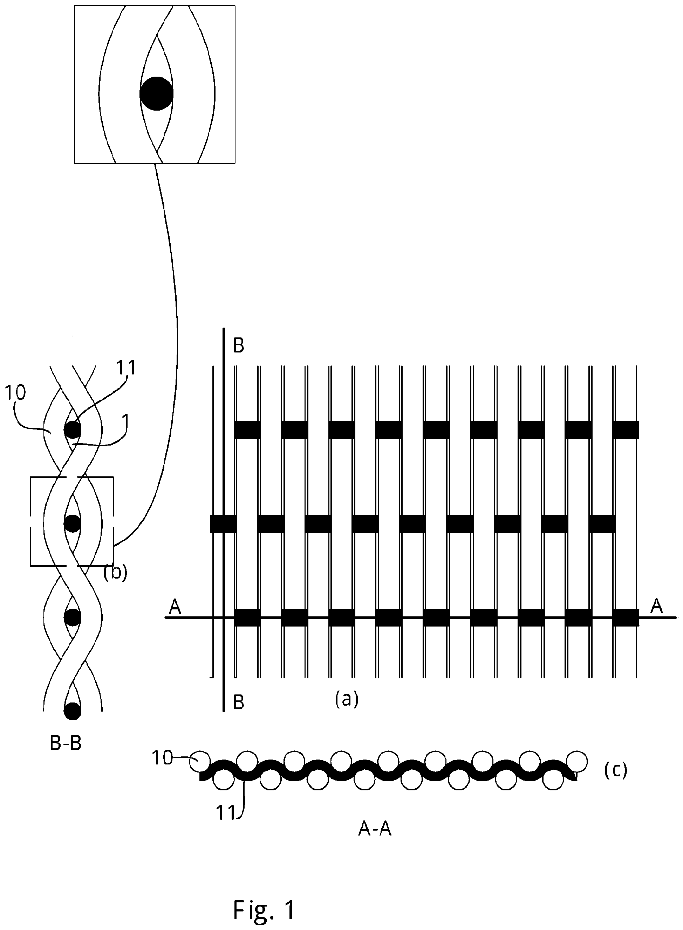

In particular, in fabrics known at the state of the art, in the space indicated with (1) in figure 1, which is created between the warp (10) and weft yarns (11), both with circular section.

Starting from this observation, it is supposed that the rhomboidal section, with equal material of the yarn resistant section, and as a consequence with equal (at least in first approximation) resistance to traction of the yarn and so of the fabric deriving therefrom, fills these holes and contributes strongly to make the weft and warp yarns closer, thus providing an almost continuous interlacing to water.

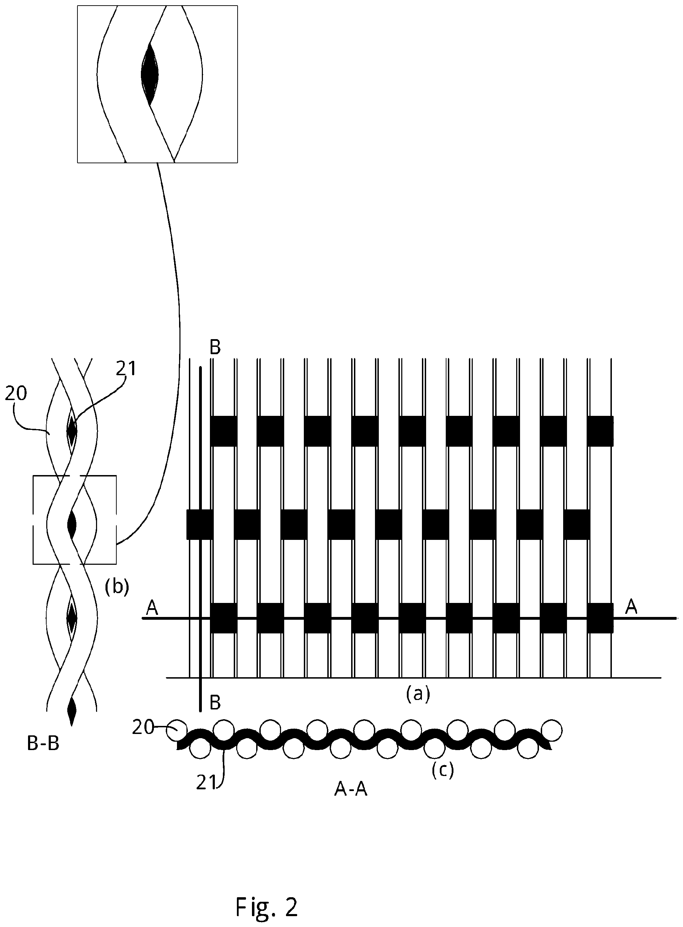

Therefore, the fabric shown in figure 2 was realized and tested. This fabric is realized with warp yarns (20) with circular section and weft yarns (21) with lozenge form section.

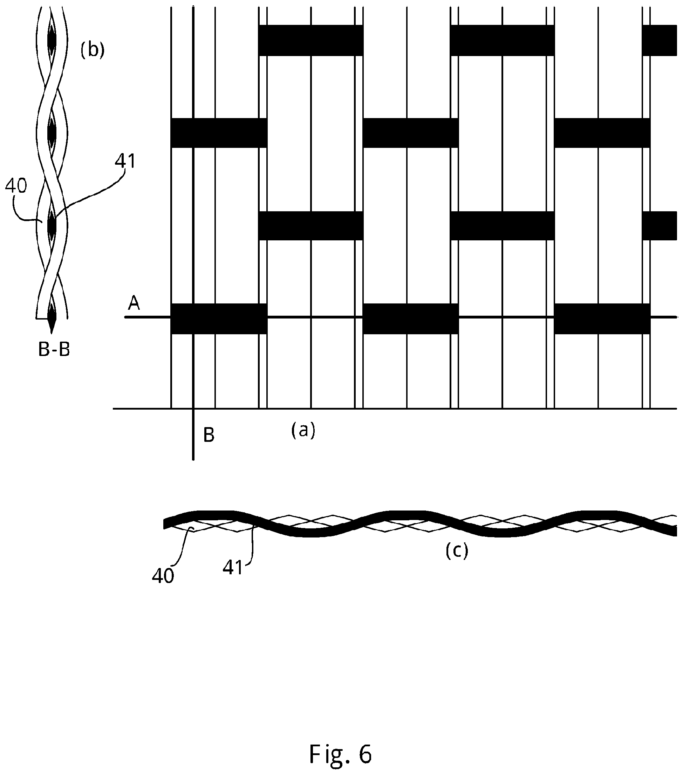

Another fabric using a rhomboidal section yarn is shown in figure 6, wherein both warp and weft have rhomboidal section.

From the tests carried out for the fabric of figure 2 it was noted that in this case, since the spaces between weft (21) and warp (20) are remarkably smaller, water keeps on sliding for the slope of the net which seems to be almost impermeable. Besides that, which is the main effect, with equal resistant section the rhomboidal section weft (21) covers more than the circular one (11) (since the rhombus major diagonal is greater than the diameter of a yarn with equal section), and so it allows to obtain a wider protection also from the direct passage of rain due to its kinetic energy. According to tests carried out these two mechanisms allow to obtain a performance increase of the fabric with rhomboidal weft in terms of impermeability without using a double layer of fabric. In fact it is clear that it would be simple to obtain a reduction of permeability to rain by installation of two layers of fabric, but that would imply double costs of net production and laying on the supporting systems.

In the following table there are reported, as a way of example, the results of water permeability tests of monolayer fabrics of the type known at the state of art (Id.1) and of the type according to the invention (Id.2). The tests have been carried out by exposing to rain with identic intensity the various fabrics arranged at various inclinations to the horizontal and oriented with the warp in cross direction to the slope. For each test it was measured the water quantity which passed through the fabric, and the water quantity which instead slid along the fabric to the edge of the same. The permeability is defined as the water percentage passing under the fabric with respect to the total water used for the test.

| ID | Description | Permeability for inclination of | | |
|---|---|---|---|---|
| | | 10° | 20° | 30° |
| 1 | Circular warp - 32 yarns/cm - 530 denier; circular weft - 8 yarn/cm - 350 denier; | 33% | 32% | 28% |
| 2 | Circular warp - 32 yarn/cm - 530 denier; Rhomboidal weft - 7.9 yarns/cm - 350 denier | 28% | 23% | 22% |
| | % variation with respect to total rain | -5% | -9% | -6% |
| | % variation of water passed under fabric | -15.1% | -28.1% | -21.4% |

As it can be noted the two fabrics are realized with yarns with identic dimensions. The two fabrics are realized according to the same textile scheme, shown in figures 1 and 2, and have the same close texture. The fabric with rhomboidal yarn, for textile technical reasons, is provided with a number of weft yarns per centimeter slightly lower than the fabric with circular weft.

Nevertheless, the fabric with rhomboidal section weft has better permeability performance for all the inclination angles, with percentage reductions, with respect to the total rain, between 5 and 9%. It is to be considered that the performance increase is relevant, since, by referring the percentages to the water passing under the fabric (and which actually arrives to cultivations) the real percentage reductions are between 15% and 28%. However, tests carried out in the field, with fabrics installed above rows of vine, indicate that the fabric performance according to the invention is really higher than that obtained in lab. With equal fabric and inclination, the permeability measured for the fabric indicated with "2" in the previous table has been lower than the one testes in lab, reasonably for the different features of the pouring rain, less intense than the one simulated in lab.

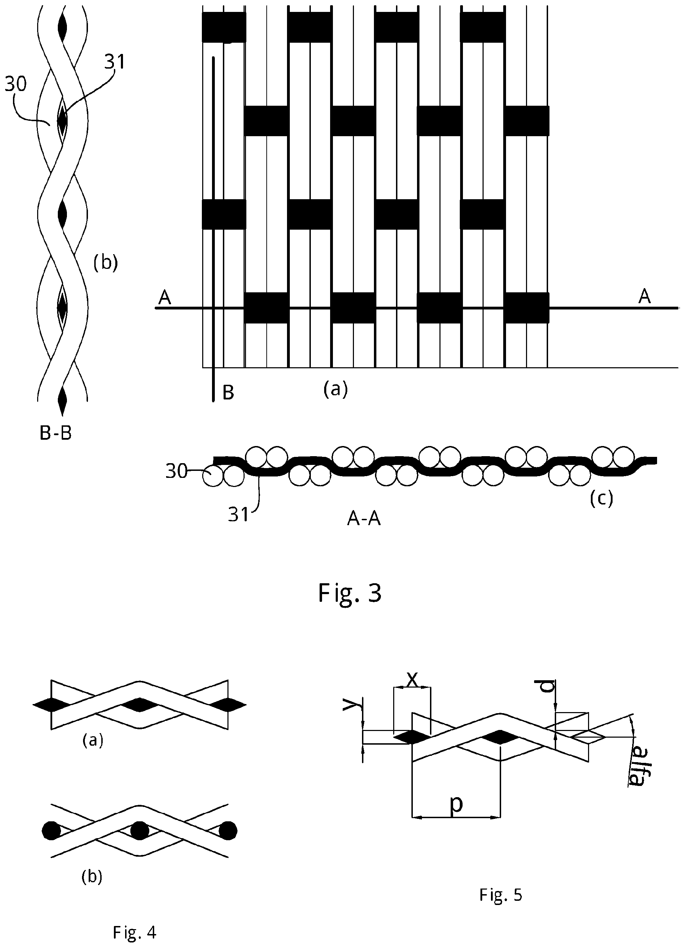

In following experiments the applicants could observe that also the textile scheme has an effect on the permeability property of the fabric, and have observed that with equal number of yarns per centimeter and with equal section of yarns both of warp and weft, the fabric shown in figure 3 has a permeability lower than the fabric shown in figure 2, which was yet better than the fabrics known at the state of the art.

In particular, as it can be observed from images, the fabric of figure 3 is realized with a textile scheme in which the warp yarns (21) are grouped in groups of two, and the weft (31) passes alternatively above and under each couple of warp yarns.

Realizing a sheet with warp yarns coupled allows to half the number of weft-warp crossings per surface unit, and to this aspect it is to be ascribed the improvement of performance in terms of impermeability.

Other embodiments of the fabric according to the invention, always using rhomboidal section weft and/or warp yarns, can be realized with different textile schemes, aiming at further reducing the number of weft-warp crossings. For example it could be used a satin weave with various consecutive floats. It is to be précised that, as it is well known, for "float" in a fabric it is intended when the weft passes alternatively above a warp yarn and under a plurality of warp yarns.

With reference to fabrics with rhomboidal weft, it is to be underlined that the rhomboidal section can be optimized (in terms of angles and dimensions of diagonals) for different distances of the weft yarns, i.e. for fabrics with different aims and uses, which keep the need to produce a high level of obstruction to water passage, yet maintaining an air permeability sufficient to avoid the rottenness of the fruits cultivated or, more generally, guaranteeing a sufficient ventilation in the space protected.

This is schematized in figure 5, in which "x" and "y" indicate the diagonals of the rhomboidal section, "p" indicates the distance (pitch) between two following weft yarns and "d" indicates the diameter of the warp yarn. The angle $\alpha$ indicates the semi-opening of the rhombus section. It is to be assumed that if the relation

$$d\ +\ y\ =\ p^\star sen(\square)$$

is valid, the angle that the warp yarn has to follow to allow the passage of the weft yarns coincides with the rhomboidal section. In this way it is maximized the adherence of the warp yarn to the weft yarn, and so, the impermeabilization properties of the fabric are optimized.

Preferably, the fabrics according to the present invention are realized with yarns realized in plastic material, for example polyethylene.

It is also to be specified that the dimensions of the weft and warp yarns in the example are not to be intended as limiting the aims of the invention.

For fabrics with rhomboidal weft it is observed in particular that good results are reached when the fabric comprises at least 30 warp yarns per centimeter and at least 6 weft yarns per centimeter. In addition, considerations on the resistance suggest to use at least 500 deniers warp yarns, at least 300 deniers weft yarns. These values are to be intended as example of preferred embodiments of the invention.

Finally, it is to be specified that all the geometries shown for weft or warp yarns with rhomboidal section are schematic, and that for technological reasons they can be provided with joints at the section angles, the dimensions of the joint radii depending on the dimension of the section and on technological limits linked to the specific material used.

**Claims**

1. Rainproof sheet with crops protection function from rain and hail, realized with a fabric having warp yarns (20, 30, 40) and/or weft yarns (21, 31, 41) with rhomboidal section, and **characterized in that** the distance between two following weft yarns and the opening angle of the rhomboidal section are such that the textile angle which the warp yarn has to follow to allow the passage of the weft yarns coincides with the opening angle ($\alpha$) of the rhomboidal section.

2. Rainproof sheet with crops protection function from rain and hail according to claim 1, **characterized in that** it is realized with a fabric having both warp yarns (40) and weft yarns (41) with rhomboidal section.

3. Rainproof sheet with crops protection function from rain and hail according to claim 1, **characterized in that** it is realized with a fabric having warp yarns (20, 30) with circular section and weft yarns (21, 31) with rhomboidal section.

4. Rainproof sheet according to any one of the preceding claims, **characterized in that** said fabric is realized with a textile scheme in which the warp yarns (20, 30) are not grouped, and the weft (21) passes alternatively above and under each warp yarn.

5. Rainproof sheet according to any one of claims 1 to 3, **characterized in that** said fabric is realized with a textile scheme in which the warp yarns (30) are grouped in groups of two, and the weft (31) passes alternatively above and under each couple of warp yarns.

6. Rainproof sheet according to any one of the preceding claims, **characterized in that** said fabric comprises at least 30 warp yarns per centimeter and at least 6 weft yarns per centimeter.

7. Rainproof sheet according to claim 6, **characterized in that** said warp yarns are at least 500 denier yarns, and **in that** said weft yarns are at least 300 denier yarns.

8. Rainproof sheet according to any one of the preceding claims, **characterized in that** said fabric is realized with the textile scheme of the satin weave.

**Patentansprüche**

1. Regenschutzplane mit Pflanzenschutzfunktion gegen Regen und Hagel, realisiert aus einem Gewebe mit Kettfäden (20, 30, 40) und/oder Schussfäden (21, 31, 41) mit rautenförmigem Querschnitt, und **dadurch gekennzeichnet, dass** der Abstand zwischen zwei aufeinanderfolgende Schussfäden und der Öffnungswinkel des Rautenabschnitts derart ist, dass der textile Winkel, dem der Kettfaden folgen muss, um den Durchgang der Schussfäden zu ermöglichen, mit dem Öffnungswinkel ($\alpha$) des Rautenabschnitts zusammenfällt.

2. Regenschutzplane mit Pflanzenschutzfunktion gegen Regen und Hagel nach Anspruch 1, **dadurch gekennzeichnet, dass** sie mit einem Gewebe verwirklicht ist, das sowohl Kettfäden (40) als auch Schussfäden (41) mit rautenförmigem Querschnitt aufweist.

3. Regenschutzplane mit Pflanzenschutzfunktion gegen Regen und Hagel nach Anspruch 1, **dadurch gekennzeichnet, dass** sie aus einem Gewebe mit Kettfäden (20, 30) mit kreisförmigem Querschnitt und Schussfäden (21, 31) mit rautenförmigem Querschnitt besteht.

4. Regenschutzplane nach einem der vorangehenden Ansprüche, **dadurch gekennzeichnet, dass** das Gewebe mit einem Textilschema realisiert ist, bei dem die Kettfäden (20, 30) nicht gruppiert sind und der Schuss (21) abwechselnd über und unter jedem Kettgarn verläuft.

5. Regenschutzplane nach einem der Ansprüche 1 bis 3, **dadurch gekennzeichnet, dass** das Gewebe mit einem textilen Schema realisiert ist, bei dem die Kettfäden (30) in Zweiergruppen gruppiert sind und der Schuss (31) abwechselnd oben und unten, unter jedem Paar Kettfäden verläuft.

6. Regenschutzplane nach einem der vorhergehenden Ansprüche, **dadurch gekennzeichnet, dass** das Gewebe mindestens 30 Kettfäden pro Zentimeter und mindestens 6 Schussfäden pro Zentimeter umfasst.

7. Regenschutzplane nach Anspruch 6, **dadurch gekennzeichnet, dass** die Kettfäden mindestens 500 Denier Fäden sind und dass die Schussfäden mindestens 300 Denier Fäden sind.

8. Regenschutzplane nach einem der vorhergehenden Ansprüche, **dadurch gekennzeichnet, dass** das Gewebe mit dem textilen Schema der Satingewebe realisiert ist.

**Revendications**

1. Feuille anti-pluie avec fonction de protection des cultures contre la pluie et la grêle, réalisée avec un tissu ayant des fils de chaîne (20, 30, 40) et/ou des fils de trame (21, 31, 41) à section rhomboïdale, et **caractérisée en ce que** la distance entre deux fils de trame suivants et l'angle d'ouverture de la section rhomboïdale sont tels que l'angle textile que doit suivre le fil de chaîne pour permettre le passage des fils de trame coïncide avec l'angle d'ouverture ($\alpha$) de la section rhomboïdale.

2. Feuille anti-pluie avec fonction de protection des cultures contre la pluie et la grêle selon la revendication 1, **caractérisée en ce qu'**elle est réalisée avec un tissu comportant à la fois des fils de chaîne (40) et des fils de trame (41) à section rhomboïdale.

3. Feuille anti-pluie avec fonction de protection des cultures contre la pluie et la grêle selon la revendication 1, **caractérisée en ce qu'**elle est réalisée avec un tissu comportant des fils de chaîne (20, 30) à section circulaire et des fils de trame (21, 31) à section rhomboïdale.

4. Feuille anti-pluie selon l'une quelconque des revendications précédentes, **caractérisée en ce que** ledit tissu est réalisé avec un schéma textile dans lequel les fils de chaîne (20, 30) ne sont pas groupés, et la trame (21) passe alternativement au-dessus et en dessous de chacun fil de chaîne.

5. Feuille anti-pluie selon l'une quelconque des revendications 1 à 3, **caractérisée en ce que** le tissu est réalisé avec un schéma textile dans lequel les fils de chaîne (30) sont groupés par groupe de deux, et la trame (31) passe alternativement au-dessus et en dessous de chaque couple de fils de chaîne.

6. Feuille anti-pluie selon l'une quelconque des revendications précédentes, **caractérisée en ce que** le tissu comprend au moins 30 fils de chaîne par centimètre et au moins 6 fils de trame par centimètre.

7. Feuille anti-pluie selon la revendication 6, **caractérisée en ce que** les fils de chaîne sont des fils d'au moins 500 deniers, et **en ce que** les fils de trame sont des fils d'au moins 300 deniers.

8. Feuille anti-pluie selon l'une quelconque des revendications précédentes, **caractérisée en ce que** le tissu est réalisé avec le schéma textile d'un tissage satiné.

10

11

(b)

B

B-B

10

11

A

B

A

(a)

A

(c)

A-A

Fig. 1

Fig. 2

## Fig. 3

Fig. 4

Fig. 5

(b)

41

40

B-B

A

B

(a)

(c)

40  41

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06346316 B
- CN 204940066
- US 20080173369 A
- DE 2847327
- EP 1046666 A
- WO 2012077144 A1